# EUROPÄISCHE PATENTANMELDUNG

(11) **EP 2 996 092 A1**
(43) Veröffentlichungstag der Anmeldung: **16.03.2016**
(21) Anmeldenummer: 14184109.8
(22) Anmeldetag: 09.09.2014
(51) Int. Cl.: G07F 7/06, B07C 5/12, B65G 47/14

(54) **Vorrichtung zur Rücknahme von Leergut**

(71) Anmelder: Envipco Holding N.V., 1015 DE Amsterdam (NL)
(72) Erfinder: Beyer, Dieter, 98701 Friedersdorf (DE); Dawson, Donald E., Paeonian Springs, VA Virginia 20129 (US); Hanserud, Terje, 1395 Hvalstad (NO)
(74) Vertreter: Bremer, Ulrich

(57) **Zusammenfassung**

Die vorliegende Erfindung betrifft eine Vorrichtung zur Rücknahme von Leergut, insbesondere von Flaschen (3) und Dosen (2) mit einem Steilförderer (1), der je auf einer Seite einer verschiedenen Anlagefläche (8) umlaufende Zugmittel (5) aufweist, an denen Mitnehmerrollen (17) drehbar gelagert sind, die zumindest im Detektionsfeld (9) einer Erkennungseinheit (10) drehangetrieben sind, so dass auf den Mitnehmerrollen (17) aufliegendes und an der Anlagefläche (8) anliegendes Leergut (2, 3) einen Drehimpuls erhält. Aufgabe der Erfindung ist es, eine derartige Vorrichtung zur Verfügung zu stellen, mit der auch Leergut mit annähernd quadratischem oder zerbeultem Querschnitt zuverlässig erkannt werden kann. Diese Aufgabe wird dadurch gelöst, dass zumindest im Detektionsfeld (9) der Erkennungseinheit (10) die feststehende Anlagefläche (8) durch ein Förderband (14) ersetzt ist, dessen Obertrum (13) in der Ebene der Anlagefläche (8) verläuft und in der gleichen Richtung umläuft wie das Obertrum (6) des Steilförderers (1), wobei die Bandgeschwindigkeit des Förderbandes (14) größer ist als die Steiggeschwindigkeit des Steilförderers (1).

## Beschreibung

Die vorliegende Erfindung betrifft eine Vorrichtung zur Rücknahme von Leergut gemäß dem Oberbegriff des Anspruchs 1.

Derartige Vorrichtungen kommen in Leergut-Rücknahmeautomaten zum Einsatz. Mit Hilfe dieser Automaten werden Einweg- und Mehrweg-Container in Form von Flaschen und Dosen zurückgenommen. Es wird dabei zwischen Einzel-Einzugsystemen und Bulk-Einzugsystemen unterschieden.

Ein Beispiel für einen Leergut-Rücknahmeautomaten mit Einzel-Einzugsystem ist in der WO 02/12095 A1 zu finden. Bei derartigen Automaten werden die Container seriell nacheinander von Hand eingegeben und dann durch eine Transporteinrichtung seriell, d.h., in einer Reihe, einzeln nacheinander, an einer Erkennungseinheit vorbeigeführt, durch die die Container auf Form, Beschaffenheit, Unversehrtheit sowie Barcodes oder Sonderzeichen überprüft werden.

Leergut-Rücknahmeautomaten mit Bulk-Einzugsystemen sind in der DE 10 2005 025 965 A1, der DE 10 2004 010 133 A1 und der DE 103 35 188 A1 beschrieben. Bei diesen Automaten wird zurückzugebendes Leergut nicht einzeln, d.h., Stück für Stück, eingegeben, sondern in einer Masse (Bulk), d.h., sozusagen als Schüttgut. Die Eingabe erfolgt in einen Eingaberaum, aus dem das Leergut durch die Transporteinrichtung heraus transportiert wird.

Eine gattungsgemäße Vorrichtung ist aus der DE 10 2009 017 211 B3 bekannt. Diese Vorrichtung weist einen Steilförderer auf, mit zwei parallel zueinander angeordneten, umlaufenden Riementrieben. Ein Obertrum eines der Riementriebe läuft dabei auf einer Seite einer feststehenden Anlagefläche um, während das Obertrum des anderen Riementriebes auf der anderen Seite der Anlagefläche umläuft. An den beiden Riementrieben sind parallel und im Abstand zueinander Mitnehmerrollen angeordnet, die mit ihren Enden drehbar an den Riementrieben gelagert sind. Zumindest im Detektionsfeld einer Kamera sind die Mitnehmerrollen drehangetrieben, so dass auf den Mitnehmerrollen aufliegendes und an der Anlagefläche anliegendes Leergut einen Drehimpuls erhält. Die daraus resultierende Drehung des Leerguts ist erforderlich, damit die Kamera auf der Mantelfläche des Leerguts aufgebrachte Barcodes und/oder Sicherheitscodes erkennen kann.

Bei diesen Vorrichtungen hat sich herausgestellt, dass sie bei Leergut mit kreisförmigem Querschnitt zuverlässig arbeiten, nicht aber bei Leergut mit annähernd quadratischem oder zerbeultem Querschnitt.

Aufgabe der vorliegenden Erfindung ist es daher, eine Vorrichtung gattungsgemäßer Art zur Verfügung zu stellen, mit der auch Leergut mit annähernd quadratischem oder zerbeultem Querschnitt zuverlässig erkannt werden kann.

Diese Aufgabe wird erfindungsgemäß mit einer Vorrichtung gelöst, die die Merkmale des Anspruchs 1 aufweist.

Erfindungsgemäß ist zumindest im Detektionsfeld der Erkennungseinheit die feste Anlagefläche durch ein Förderband ersetzt. Das Obertrum dieses Förderbandes verläuft in der Ebene der Anlagefläche und in der gleichen Förderrichtung wie das Obertrum der Steilförderers, wobei die Bandgeschwindigkeit größer ist als die Steiggeschwindigkeit des Steilförderers.

Aufgrund dieser Lösung erhält ein auf einer Mitnehmerrolle aufliegendes Leergut einen Drehimpuls durch die sich drehende Mitnehmerrolle und zusätzlich einen gleichgerichteten Drehimpuls durch das Förderband. Die beiden sich addierenden Drehimpulse sind ausreichend, um auch ein Leergut mit quadratischem oder zerbeultem Querschnitt zuverlässig zu drehen.

Weitere vorteilhafte Ausgestaltungen der Erfindung ergeben sich aus den Unteransprüchen.

Die Erfindung wird nachstehend anhand eines Ausführungsbeispieles näher erläutert. In der dazugehörigen Zeichnung zeigt:

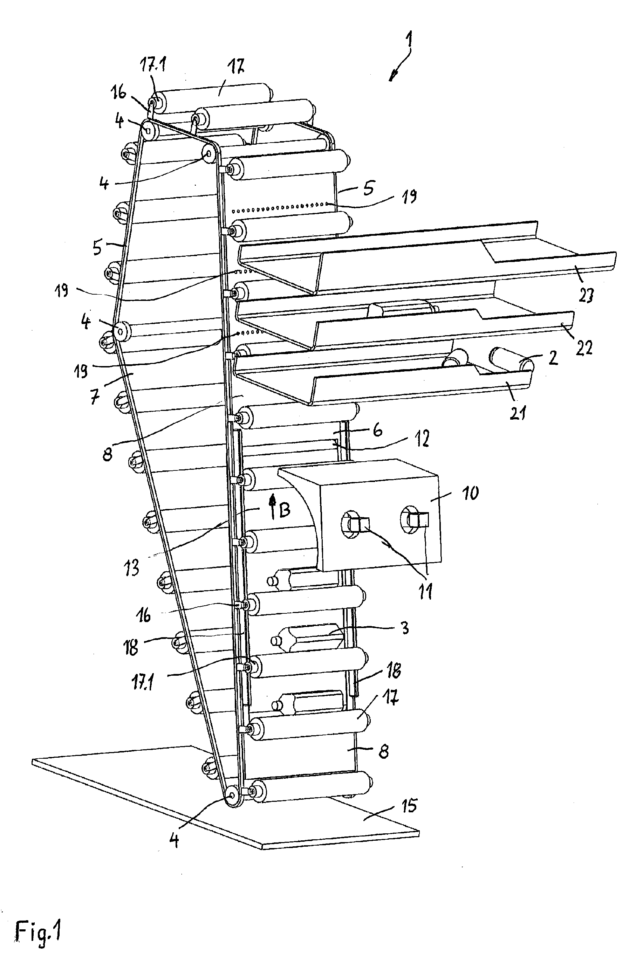

- Fig. 1:: einen perspektivischen Blick von schräg vorn auf einen Steilförderer der Vorrichtung mit funktionswichtigen Bauteilen,

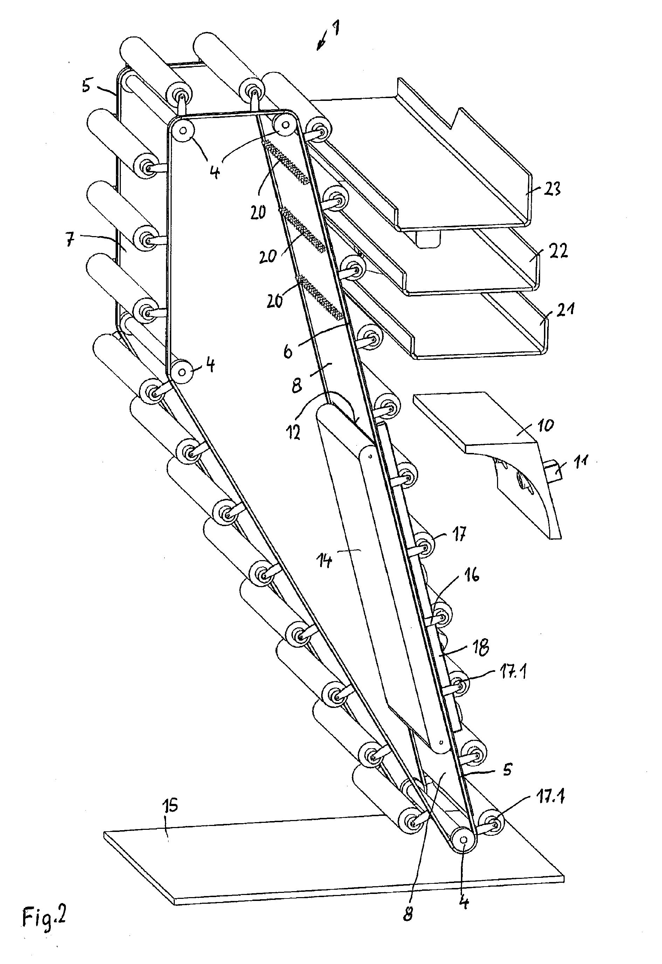

- Fig. 2:: einen perspektivischen Blick von schräg hinten auf die Darstellung gemäß Fig. 1,

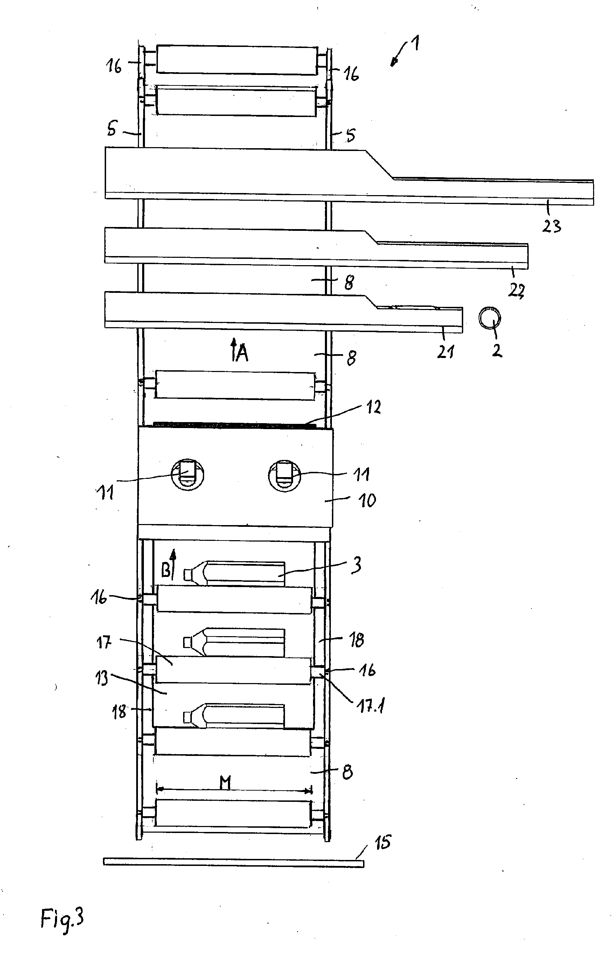

- Fig. 3:: eine Vorderansicht des Steilförderers, und
- Fig. 4:: eine Seitenansicht des Steilförderers.

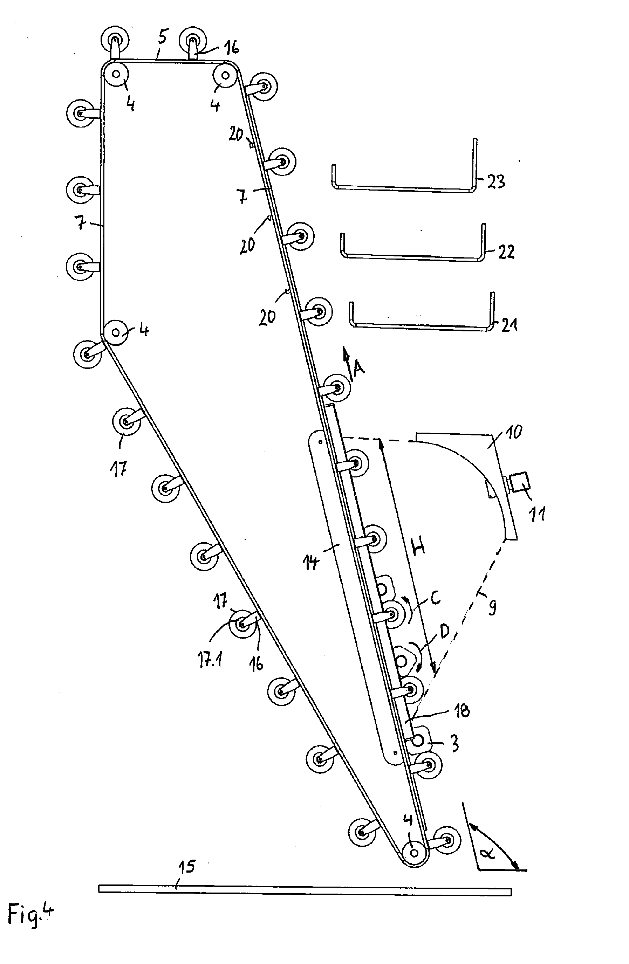

In der Zeichnung ist ein Steilförderer 1 einer ansonsten nicht weiter dargestellten Vorrichtung zur Rücknahme von Leergut, insbesondere von Metalldosen 2 und PET-Flaschen 3, gezeigt. Mit dem Bezugszeichen 15 ist der Boden der Vorrichtung angedeutet. Der Anstellwinkel α (siehe Fig. 4) des Steilförderers 1 liegt bei diesem Ausführungsbeispiel in einem Bereich von 60° bis 85°. Er weist zwei parallel voneinander beabstandete, auf Umlenkrollen 4 umlaufende Zugmittel auf, die in diesem Ausführungsbeispiel als Riementriebe 5 ausgeführt sind. Anstelle der Riementriebe 5 können auch Kettentriebe oder andere geeignete Zugmittel eingesetzt werden. Mindestens eine der Umlenkrollen 4 ist motorisch angetrieben, um die Riementriebe 5 anzutreiben. Aufgrund des Umlaufes der Riementriebe 5 um die Umlenkrollen 4 ist ein Obertrum 6 und ein Untertrum 7 des Steilförderers 1 gebildet. Im Bereich des Obertrums 6 ist zwischen den Riementrieben 5 eine ortsfeste Anlagefläche 8 für das Leergut 2 und 3 angeordnet. In der Anlagefläche 8 ist im Detektionsfeld 9 einer Erkennungseinheit 10, das in Fig. 4 durch gestrichelte Linien symbolisch dargestellt ist, ein Fenster 12 ausgeschnitten. Die Erkennungseinheit 10 weist zwei Kameras 11 sowie eine nicht dargestellte Halogenstrahlungsquelle zur Beleuchtung des Leerguts 2, 3 im Auflicht auf.

Das Fenster 12 in der der Anlagefläche 8 ist im Wesentlichen durch das Obertrum 13 eines Förderbandes 14 ausgefüllt, welches um eine obere und eine untere Umlenkrolle motorisch angetrieben umläuft. Die Laufrichtung des Obertrums 6 des Steilförderers 1 sowie des Obertrums 13 des Förderbandes 14 stimmen überein, was durch Pfeile A und B symbolisch dargestellt ist.

Von den Riementrieben 5 ragen senkrecht, gleichmäßig voneinander beabstandet, Lagerzapfen 16 ab. In diesen Lagerzapfen 16 sind die Enden von Mitnehmerrollen 17 drehbar gelagert. Die Mitnehmerrollen 17 haben kurze zapfenförmige Endbereiche 17.1 mit einen kleineren Durchmesser als ein Mitnehmerbereich M der Mitnehmerrollen 17 und laufen im Detektionsbereich 9 der Erkennungseinheit 10 unter Reibschluss auf Leisten 18, die senkrecht vom Randbereich der dort ausgeschnittenen Anlagefläche 8 abragen. Aufgrund dieses Reibschlusses werden die Mitnehmerrollen 17 im Gegenuhrzeigersinn (Pfeil C) angetrieben, da sich das Obertrum 6 des Steilförderers 1 in Richtung des Pfeiles A nach oben bewegt. Die Mitnehmerrollen 17 berühren dabei weder die Anlagefläche 8 noch das Obertrum 13 des Förderbandes 14. Dadurch, dass die Mitnehmerrollen 17 in ihren Endbereichen 17.1 im Durchmesser reduziert sind, haben sie eine höhere Umfangsgeschwindigkeit als bei nicht reduziertem Durchmesser. Im Resultat verkürzt sich dadurch die Höhe H des Detektionsfeldes 9, das heißt, der Blickwinkel der Kameras 11 muss weniger hoch (höhe H) sein, da die zu erkennenden Symbole auf dem Leergut schneller sichtbar werden, wenn der Steilförderer 1 das Leergut 2, 3 durch das Detektionsfeld 9 fördert.

Im oberen Endbereich des Steilförderers 1 sind übereinander und voneinander beabstandet drei parallel zu den Mitnehmerrollen 17 ausgerichtete Blasöffnungen 19 angeordnet, wobei jede Blasöffnung 19 eine Luftdüse 20 aufnimmt, die über eine nicht dargestellte Leitungvgesteuert mit Druckluft versorgt wird. Jeder Reihe von Blasöffnungen 19 ist eine vor dem Obertrum 6 des Steilförderers 1 angeordnete Auffangrinne 21, 22 bzw. 23 zugeordnet. In diesen Auffangrinnen 21, 22, 23 sind nicht dargestellte Förderbänder angeordnet, die quer zur Förderrichtung des Steilförderers 1 verlaufen.

Nachstehend wird die Arbeitsweise der Vorrichtung erläutert.

Zurückzunehmendes Leergut, im Falle dieses Ausführungsbeispieles Metalldosen 2 und PET-Flaschen 3, gelangen über eine nicht dargestellte Eingabe der Vorrichtung in den unteren Bereich des Steilförderers 1 und werden dort, auf den Mitnehmerrollen 17 aufliegend und an der Anlagefläche 8 anliegend, in Richtung des Pfeils A nach oben gefördert. Sobald die Mitnehmerrollen 17 auf diesem Weg nach oben in den Bereich der Leisten 18 gelangen, kommen ihre zapfenförmigen Endbereiche 17.1 in Reibkontakt mit den Leisten 18, so dass die Mitnehmerrollen 17, solange sie im Kontakt mit den Leisten 18 sind, in Richtung des Pfeils C, also im Gegenuhrzeigersinn, drehangetrieben werden. Dadurch erhält auf den Mitnehmerrollen 17 aufliegendes Leergut 2,3 einen Drehimpuls in Richtung des Pfeils D, also im Uhrzeigersinn. Gleichzeitig mit dem Einsetzen ihres Drehantriebs gelangen die Mitnehmerrollen 17 in den Bereich des Obertrums 13 des Förderbandes 14. Da die Umlaufgeschwindigkeit des Förderbandes 14 größer ist als die Steiggeschwindigkeit des Steilförderers 1 in Richtung des Pfeiles A, erhält auf den Mitnehmerrollen 17 aufliegendes Leergut 2, 3 einen zusätzlichen Drehimpuls in Richtung des Pfeiles D, also im Uhrzeigersinn. Aufgrund der Überlagerung dieser beiden Drehimpulse wird das auf den Mitnehmerrollen 17 aufliegende Leergut 2,3 im Detektionsfeld 9 der Erkennungseinheit 10 zuverlässig gedreht, auch wenn es einen annähernd quadratischen Querschnitt oder einen zerbeulten Querschnitt, also unrunden Querschnitt, aufweist. Das Detektionsfeld 9 der Erkennungseinheit 10 umfasst mindestens die gesamte Breite des Steilförderers 1 sowie die Höhe H. Wenn das Leergut 2, 3 das Detektionsfeld 9 der Erkennungseinheit 10 durchläuft, erfassen die Kameras 11 auf das Leergut 2, 3 aufgebrachte Barcodes bzw. Sonderzeichen. Sie sind über eine nicht dargestellte Datenleitung mit einer nicht dargestellten Steuereinheit verbunden.

Die nicht dargestellte Steuereinheit steuert die Luftdüsen 20. Durch Ansteuerung der unteren Reihe von Luftdüsen 20 werden auf den Mitnehmerrollen 17 aufliegende Metalldosen 2 gezielt vom Steilförderer 1 weggeblasen, d.h., die Luftdüsen 20, die hinter einer zu entfernenden Metalldose 2 angeordnet sind, geben einen kurzen Luftstoß ab, wodurch die Metalldose 2 vom Steilförderer 1 abgeworfen wird und auf das Förderband der unteren Auffangrinne 21 gelangt. Durch Ansteuerung der mittleren Reihe von Luftdüsen 20 erfolgt entsprechend eine gezielte Entfernung von PET-Flaschen 3 vom Steilförderer 1, die auf dem Förderband der mittleren Auffangrinne 22 landen. Durch Ansteuerung der oberen Reihe von Luftdüsen 20 wird Leergut vom Steilförderer 1 entfernt, welches durch die Erkennungseinheit 10 nicht erkannt werden konnte. Dieses Leergut gelangt auf das Förderband der oberen Auffangrinne 23. Die Förderbänder der Auffangrinnen 21 und 22 fördern das auf ihnen liegende Leergut zur Seite vom Steilförderer 1 weg, welches am Ende der Förderrinnen 21 und 22 in separate nicht dargestellte Auffangbehälter fällt. Das auf dem Förderband der Auffangrinne 23 liegende, nicht erkannte Leergut fällt in einen nicht dargestellten Rückgabeschacht und kann aus diesem entnommen werden.

## Patentansprüche

1. Vorrichtung zur Rücknahme von Leergut, insbesondere von Flaschen (3) und Dosen (2), aufweisend einen Steilförderer (1) mit zwei parallel zueinander angeordneten, umlaufenden Zugmitteln (5), wobei ein Obertrum (6) der Zugmittel (5) auf einer Seite einer feststehenden Anlagefläche (8) und das andere Obertrum (6) auf der anderen Seite der Anlagefläche (8) verläuft, sowie an den Zugmitteln (5) parallel und im Abstand zueinander Mitnehmerrollen (17) mit ihren Enden drehbar gelagert und zumindest im Detektionsfeld (9) einer Erkennungseinheit (10) drehangetrieben sind, so dass auf den Mitnehmerrollen (17) aufliegendes und an der Anlagefläche (8) anliegendes Leergut (2,3) einen Drehimpuls erhält, **dadurch gekennzeichnet, dass** zumindest im Detektionsfeld (9) der Erkennungseinheit (10) die feststehende Anlagefläche (8) durch ein Förderband (14) ersetzt ist, dessen Obertrum (13) in der Ebene der Anlagefläche (8) verläuft und in der gleichen Richtung umläuft wie das Obertrum (6) des Steilförderers (1), wobei die Bandgeschwindigkeit des Förderbandes (14) größer ist als die Steiggeschwindigkeit des Steilförderers (1).

2. Vorrichtung zur Rücknahme von Leergut nach Anspruch 1, **dadurch gekennzeichnet, dass** das Obertrum (13) des Förderbandes (14) in einem Fenster (12) der Anlagefläche (8) angeordnet ist.

3. Vorrichtung zur Rücknahme von Leergut nach Anspruch 1 oder 2, **dadurch gekennzeichnet, dass** die Mitnehmerrollen (17) beidseitig zapfenförmigen Endbereiche (17.1) aufweisen, die einen kleineren Durchmesser als ein Mitnehmerbereich (M) der Mitnehmerrollen (17) besitzen und in dem Detektionsfeld (9) der Erkennungseinheit (10) unter Reibschluss auf Leisten (18) laufen, wobei der Mitnehmerbereich (M) weder Kontakt mit der Anlagefläche (8) noch mit dem Obertrum (13) des Förderbandes (14) hat.

4. Vorrichtung zur Rücknahme von Leergut nach Anspruch 1, **dadurch gekennzeichnet, dass** das Obertrum (6) des Steilförderer (1) einen Anstellwinkel α in einem Bereich von 60° bis 85° besitzt.
